# EUROPEAN PATENT APPLICATION

(11) **EP 3 533 962 A1**
(43) Date of publication of application: **04.09.2019**
(21) Application number: 17866012.2
(22) Date of filing: 31.08.2017
(51) Int. Cl.: E05F 11/48, B60J 1/17, E05F 11/04, E05F 15/689

(54) **OBJECT MOVING DEVICE**

(30) Priority: 31.10.2016 JP 2016213709
(71) Applicant: HI-LEX Corporation, Takarazuka-shi, Hyogo 665-0845 (JP)
(72) Inventor: NISHIKAWA, Ryota, Takarazuka-shi Hyogo 665-0845 (JP)
(74) Representative: Epping - Hermann - Fischer
(86) International application number: PCT/JP2017/031484
(87) International publication number: WO 2018/079067

(57) **Abstract**

It is made possible to achieve both a small thickness and high strength by using object moving device D including movement object 1, cable 2, drum member 3, drive source 4, and base member 5. Base member 5 includes guide rail portion 51 configured to guide movement object 1 in length direction D1, direction-changing sections 52a and 52b, and drum-member housing portion 53. Guide rail portion 51 includes elongated protruding portion 51a extending along a moving direction of movement object 1 and configured to slide while movement object 1 is engaged therewith. Base member 5 includes extension wall portion 57 extending along the elongated protruding portion 51a and forming cable housing recess portion Cv2 which houses cable 2 extending from movement object 1 toward direction-changing sections 52a and 52b.

## Description

### Technical Field

The present invention relates to an object moving device which moves an object to be moved.

### Background Art

As object moving devices each configured to move an object to be moved (hereinafter, referred to as "movement object") by transmitting a drive force of a drive source to the movement object via a wire, window regulators have been used for apparatuses each being attached to a vehicle and configured to raise and lower a window glass. In Patent Literature (hereinafter, referred to as "PTL") 1, for example, there are disclosed: a window regulator configured to raise and lower a window glass attached to a slider base, by moving, via a wire, the slider base which is a movement object; and a resin-made guide rail which is a base member of this window regulator.

This guide rail has a front surface and a rear surface. The front surface includes: a rib region in which a plurality of ribs formed along a longitudinal direction are provided; and a non-rib region which is formed along the longitudinal direction and adjacent to the rib region and in which no ribs are provided. The rear surface includes a plurality of ribs provided so as to extend in a plurality of directions. This guide rail is provided with the non-rib region so as to allow the slider base to slide smoothly.

### Citation List

### Patent Literature

PTL 1
Japanese Patent Application Laid-Open No. 2014-043696

### Summary of Invention

### Technical Problem

In the window regulator described in PTL 1, the strength of the guide rail is enhanced by the rib region included in the front surface of the guide rail and/or the plurality of ribs included in the rear surface of the guide rail. The strength is enhanced, for example, by providing the guide rail with the plurality of ribs in a zigzag shape and/or the like in the rib region.

However, because of the provision of the non-rib region for allowing the slider base to slide, this guide rail is reduced in strength in the non-rib region. Providing a rib on a side opposite to a slide side of the slider base for the purpose of increasing the strength of the non-rib region ends up increasing a thickness of the guide rail.

An object of the present invention is to provide an object moving device which can have both a small thickness and high strength.

### Solution to Problem

An object moving device of the present invention includes: a movement object; a cable in connection with the movement object; a drum member in connection with the cable; and a drive source to be in connection with the drum member, and to rotate the drum member; and a base member having a thickness. The object moving device moves the movement object via the cable by winding and unwinding, by a drive force of the drive source, the cable in connection with the drum member. The base member includes a guide rail portion including one end portion and another end portion in a length direction, and being configured to guide the movement object in the length direction, a direction-changing section configured to change a direction in which the cable extends between the movement object and the drum member, and a drum-member housing portion in which the drum member is housed. The guide rail portion includes an elongated protruding portion extending along a moving direction of the movement object and configured to slide while the movement object is engaged therewith. The base member includes an extension wall portion extending along the elongated protruding portion and forming a cable housing recess portion which houses a cable extending from the movement object toward the direction-changing section.

### Advantageous Effects of Invention

According to an object moving device of the present invention, it is made possible to achieve both a small thickness and high strength of the object moving device.

### Brief Description of Drawings

FIG. 1 is a front view of a base member as viewed from a surface side where a movement object is attached for an object moving device according to an embodiment of the present invention,
FIG. 2 is a rear view of the base member as viewed from a surface side where a drive source is attached for the object moving device of FIG. 1,
FIG. 3 is a schematic view of an A-A line cross-section of a state in which the drive source is omitted for the object moving device of FIG. 1,
FIG. 4 is a schematic view of a B-B line cross-section of the movement object which is illustrated in a simplified manner for the object moving device of FIG. 1,
FIG. 5 is a front schematic view of the base member corresponding to FIG. 1,
FIG. 6 is a rear schematic view of the base member corresponding to FIG. 2,
FIG. 7 is a C-C line cross-sectional view of the base member of FIG. 5,
FIG. 8 is a schematic side view of the object moving device of FIG. 1 as viewed from a side where the movement object is provided, while the drive source is omitted,
FIG. 9 is a diagram illustrating a variation of the object moving device of FIG. 2, in which erected portions are provided on a rear surface of the base member,
FIG. 10 is a rear view of a state in which the drive source has been removed from the object moving device of FIG. 2,
FIG. 11 is a perspective view illustrating a drum-side protection wall portion and a direction-changing-section-side wall portion on a rear surface side of the base member,
FIG. 12 is a cross-sectional view resulting from cutting an extension wall portion in a length direction and illustrating a state in which a cable comes into contact with a bottom surface of a cable housing recess portion of the extension wall portion, and
FIG. 13 is a D-D line cross-sectional view in FIG. 6.

### Description of Embodiments

Hereinafter, an object moving device of an embodiment of the present invention will be described with reference to the drawings. Note that, the embodiment to be illustrated below is only an example, and the object moving device of the present invention is not limited to the following embodiment.

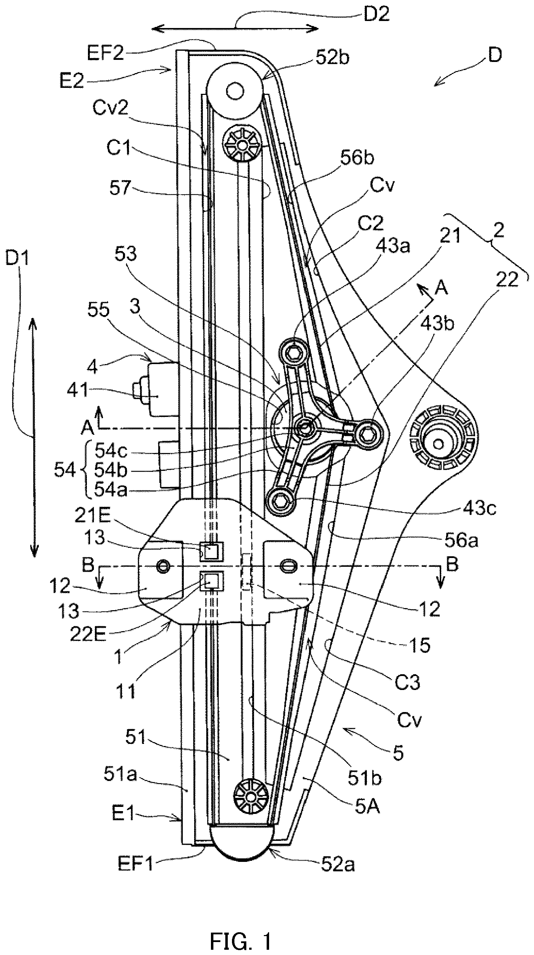

As illustrated in FIG. 1, object moving device D of the present embodiment includes: movement object 1; cable 2 connected to movement object 1; drum member 3 to which cable 2 is connected; drive source 4 connected to drum member 3 and configured to rotate drum member 3; and base member 5 having a thickness. In the present embodiment, base member 5 includes guide rail portion 51, direction-changing sections 52a and 52b (may be collectively referred to as "direction-changing section 52" simply, hereinafter), and drum-member housing portion 53.

Object moving device D moves movement object 1 via cable 2 by winding and unwinding cable 2 connected to drum member 3, by a drive force of drive source 4. Object moving device D of the present embodiment is illustrated as a window regulator which is attached to a door panel and/or the like of a vehicle and opens and closes a window glass (not illustrated) connected to a carrier plate by moving the carrier plate (movement object 1). However, object moving device D may be attached to a base body which serves as a basis for movement of the movement object and used in another optional mechanism as a device for moving movement object 1.

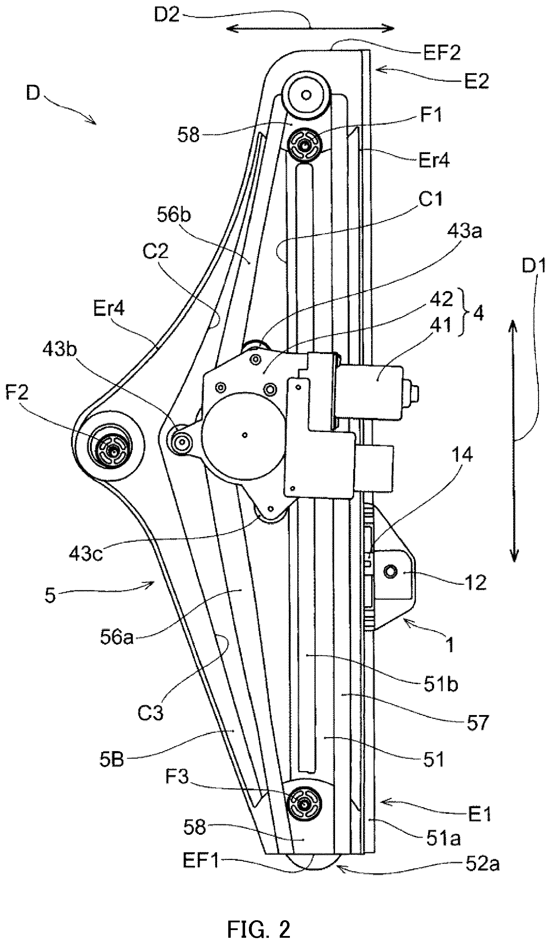

Drive source 4 generates a drive force for rotating drum member 3. Drive source 4 is connected to drum member 3 and rotates drum member 3. In the present embodiment, as illustrated in FIG. 2, drive source 4 includes: motor 41 whose output shaft (not illustrated) is connected to drum member 3 (see FIG. 1) via a deceleration mechanism and/or the like; and motor housing 42 which is attached to base member 5 and houses at least a part of the deceleration mechanism and/or motor 41. In the present embodiment, drive source 4 is attached to another surface 5B (see FIG. 2, surface on a rear side) which is a side opposite to one surface 5A (see FIG. 1, surface on a front side) of base member 5 where movement object 1 moves. In the present embodiment, as illustrated in FIG. 1 and FIG. 2, drive source 4 is fixed to base member 5 by attaching motor housing 42 to a plurality (three positions in FIG. 1 and FIG. 2) of attachment portions 43a, 43b, and 43c provided on a radially outer side of drum-member housing portion 53. Although attachment portions 43a, 43b, and 43c are portions to be fastened by bolts and/or the like in combination with an attachment portion of motor housing 42, each of attachment portions 43a, 43b, and 43c includes a substantially columnar-shaped fixing portion, and a rib extending over the attachment portion is formed. As to an area surrounded by attachment portions 43a, 43b, and 43c, the portion is formed as a portion having strength.

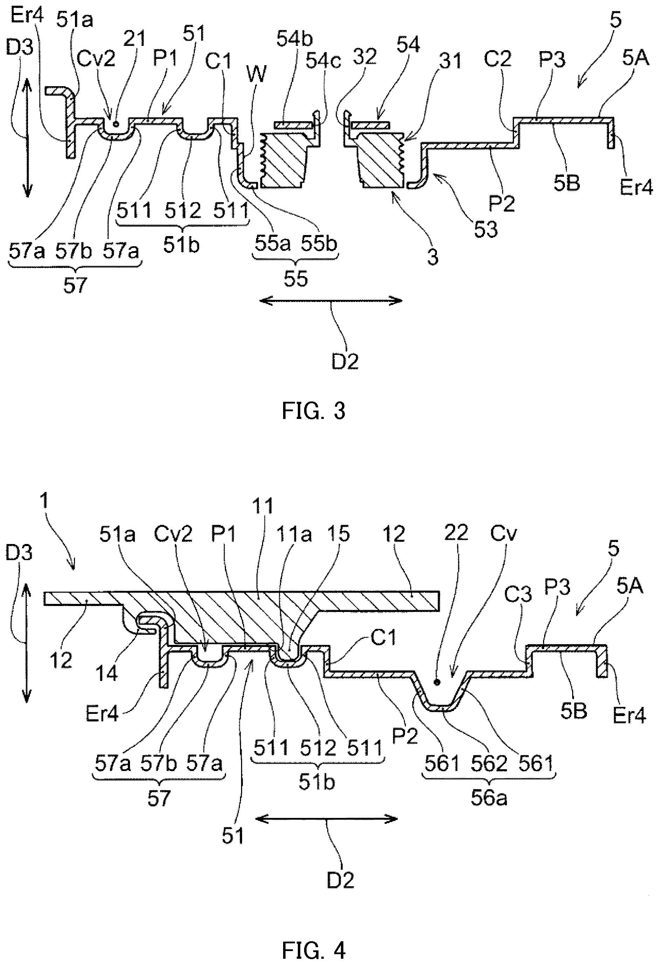

Drum member 3 is caused to rotate forward and backward by drive source 4 and winds and unwinds cable 2 by forward and backward rotation of drum member 3. As illustrated in FIG. 1 and FIG. 3, drum member 3 is configured to be housed in drum-member housing portion 53 of base member 5 and to rotate within drum-member housing portion 53. Drum member 3 includes a cable-end engagement portion (not illustrated) with which a cable end (not illustrated) on one end side of cable 2 is engaged, and also includes cable winding portion 31 (see, FIG. 3) around which cable 2 is wound on an outer periphery of drum member 3. Note that, in FIG. 3, drive source 4 and cable 2 wound around drum member 3 are omitted.

In order to operate movement object 1, cable 2 is wound around drum member 3 by rotation of drum member 3 in one direction and is unwound from drum member 3 by rotation of drum member 3 in another direction. In the present embodiment, as illustrated in FIG. 1, cable 2 includes first cable 21 and second cable 22. A cable end (not illustrated) of one end side of each of first and second cables 21 and 22 is connected to drum member 3. Moreover, as illustrated in FIG. 1, cable ends 21E and 22E on another end side of first and second cables 21 and 22 are connected to movement object 1. First and second cables 21 and 22 are routed so as to extend toward direction-changing section 52 from drum member 3 and to be changed in direction by direction-changing section 52 to extend toward movement object 1. Note that, a publicly-known cable can be used for cable 2.

Movement object 1 is a member to be attached to base member 5 so as to move along guide rail part 51 by operation of cable 2. As long as movement object 1 is a member that moves by operation of cable 2, movement object 1 is not particularly limited. However, in this embodiment, movement object 1 is illustrated as a carrier plate used in a window regulator. In this embodiment, as illustrated in FIG. 1 and FIG. 4, movement object 1 includes: slide portion 11 configured to slide along guide rail portion 51 and including a facing surface which faces guide rail portion 51; and window glass attachment portions 12 which are provided on both sides of slide portion 11 in width direction D2 perpendicular to length direction D1 of guide rail portion 51 and to which a window glass is attached. Note that, the shape of movement object 1 is not limited to the illustrated shape.

In the present embodiment, as illustrated in FIG. 1, movement object 1 includes cable-end connection portions 13 to which cable ends 21E and 22E on the other end side of cable 2 are connected. In the present embodiment, cable-end connection portions 13 are provided as a pair, and respective cable ends 21E and 22E of first and second cables 21 and 22 are connected to the pair of cable-end connection portions 13. Moreover, in the present embodiment, as illustrated in FIG. 1, the pair of cable-end connection portions 13 is placed coaxially such that first and second cables 21 and 22 extend substantially linearly from movement object 1. Cable end 21E of first cable 21, which is a raising-side cable, and cable end 22E of second cable 22, which is a lowering-side cable, are respectively connected to cable-end connection portions 13. Thus, the drive force of drive source 4 is transmitted to movement object 1, and movement object 1, which is a carrier plate, can be raised and lowered.

In the present embodiment, as illustrated in FIG. 4, movement object 1 includes a portion to be guided (hereinafter, referred to as "guided portion 14") which is engaged with elongated protruding portion 51a provided in guide rail portion 51 to be described later. During movement of movement object 1, guided portion 14 is guided while elongated protruding portion 51a is engaged therewith. Guided portion 14 is configured to be engaged in an about-axis direction with the length direction of elongated protruding portion 51a as the axis without being engaged in the length direction of elongated protruding portion 51a with respect to elongated protruding portion 51a. Further, although details will be given later, in the present embodiment, movement object 1 includes, in addition to guided portion 14, movement-object-side fitting portion 15 configured to fit to base-member-side fitting portion 51b (see, FIG. 4) provided in base member 5 to be described later, on a surface facing base member 5.

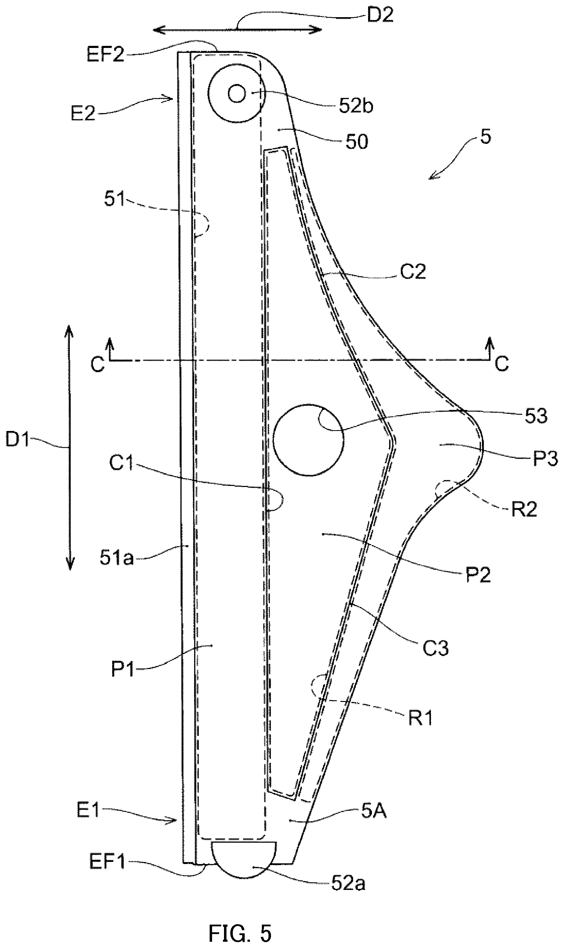

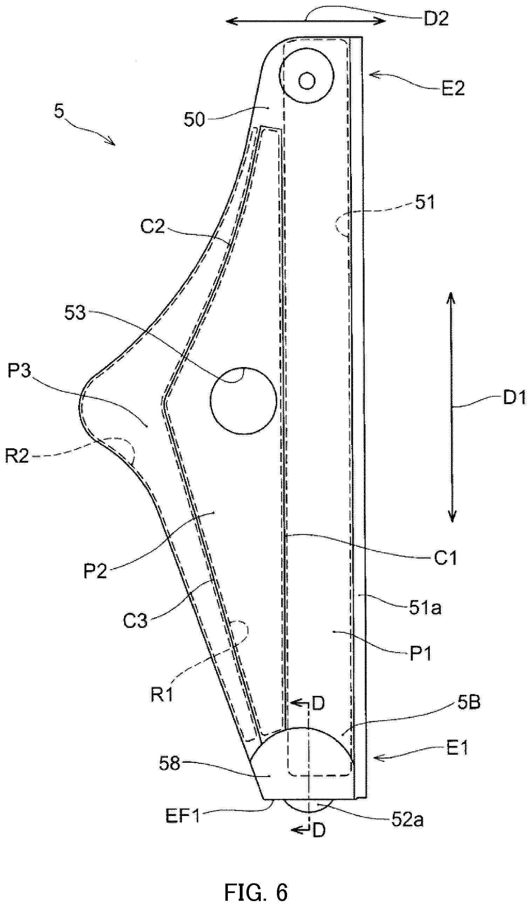

Base member 5 is a member serving as a base to which each portion of object moving device D, such as movement object 1, drum member 3, drive source 4, and/or the like, is attached. In the present embodiment, base member 5 has a predetermined thickness and is composed of main-body portion 50 (see, FIG. 5) to which each portion of object moving device D is attached. In this embodiment, main-body portion 50 is provided as a plate-shaped member having a predetermined thickness and includes one surface 5A and another surface 5B which are in a front and rear side relationship as illustrated in FIG. 5 and FIG. 6. Object moving device D of the present embodiment is configured such that movement object 1 moves on a side of one surface 5A (see, FIG. 1) of main-body portion 50, and is also configured such that drive source 4 is attached on a side of another surface 5B (see, FIG. 2). A portion where the drive source is placed, portions where the direction-changing members are placed, and a portion where the carrier plate is guided and slides are integrally formed.

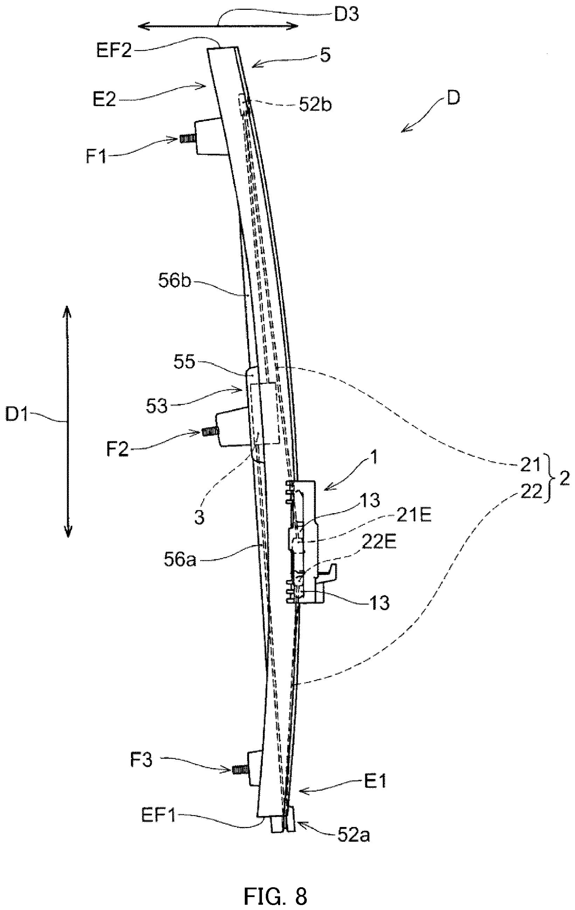

By attaching each configuration member of object moving device D to base member 5, object moving device D becomes a state in which each portion of object moving device D is integrated into a single body, and in this state, object moving device D can be attached to an attachment object, such as a door panel of a vehicle. Accordingly, object moving device D can be easily attached to the attachment object, and work efficiency of assembly to the attachment object is enhanced. Note that, in this embodiment, as illustrated in FIG. 2 and FIG. 8, base member 5 is attached to an attachment object, such as a door panel, via fixing portions F1, F2, and F3 provided in base member 5. The number of fixing portions is not particularly limited, but in this embodiment, the fixing portions are provided in three positions of base member 5. Note that, as long as the fixing portions can fix base member 5 to an attachment object, the shapes and/or structures of the fixing portions are not particularly limited, and a publicly known fixing structure can be used.

Base member 5 is made of a resin, and for example, a synthetic resin having a predetermined rigidity is used. In a case where base member 5 is made of a resin, weight reduction of the entirety of object moving device D is made possible. Further, shaping into a desired shape is easily performed. The shape of base member 5 can be appropriately changed in accordance with an application in which object moving device D is used, or an attachment object, and is not particularly limited. In this embodiment, as illustrated in FIG. 1 and FIG. 2, base member 5 is in a substantially triangular shape. More specifically, as schematically illustrated in FIG. 5, base member 5 includes: guide rail portion 51 which extends in a moving direction (length direction D1) of movement object 1; a drum-member placing region R1 provided adjacent to one side of both side edges of guide rail portion 51, which extend in length direction D1 of guide rail portion 51, and including drum-member housing portion 53; and substantially V-shaped peripheral edge portion R2 placed so as to surround drum-member placing region R1 with guide rail portion 51. Note that, in this embodiment, drum-member placing region R1 includes drum-member housing portion 53 and a peripheral region of cable 2 extending toward direction-changing sections 52a and 52b from drum member 3. Note that, in this embodiment, the shape as viewed from a side surface of base member 5 is curved along length direction D1 of guide rail portion 51 so as to follow a curve of an attachment object (e.g., door panel or the like) as illustrated in FIG. 8.

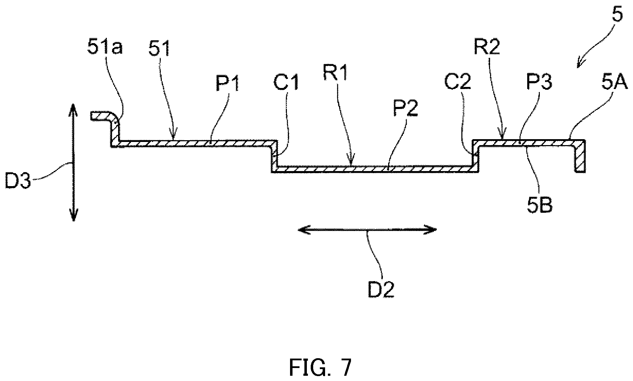

In this embodiment, as illustrated in FIG. 5 and FIG. 7, main-body portion 50 of base member 5 includes a plurality of plate-like portions P1, P2 and P3, and a plurality of connection portions C1, C2, and C3 which connect between the plurality of plate-like portions P1, P2, and P3. Plate-like portions P1, P2, and P3 are each a portion having an expansion while including a direction orthogonal to thickness direction D3 of main-body portion 50 (see, FIG. 7). In the present embodiment, plate-like portions P1, P2, and P3 each have an expansion in length direction D1 and width direction D2 of base member 5. Plate-like portions P1, P2, and P3 are each formed as a curved surface in accordance with a curve (see, FIG. 8) of base member 5 in this embodiment, but may be a flat surface. Further, although illustration is omitted in FIG. 5, drum-side protection wall portion 55, direction-changing-section-side wall portion 56, extension wall portion 57, and erected portion Er and/or the like to be described later may protrude from plate-like portions P1, P2, and P3.

In this embodiment, as illustrated in FIG. 5, the plurality of plate-like portions P1, P2, and P3 include: first plate-like portion P1 which is in a region of guide rail portion 51; second plate-like portion P2 which is provided around drum-member housing portion 53 as a center and which corresponds to drum-member placing region R1 described above; and third plate-like portion P3 which corresponds to peripheral edge portion R2 described above. However, the plurality of plate-like portions is not limited to the illustrated arrangement and shapes.

As illustrated in FIG. 5 and FIG. 7, connection portions C1, C2, and C3 protrude in thickness direction D3 and connect the plurality of plate-like portions P1, P2, and P3 with each other. In this embodiment, two plate-like portions to be connected with each other by a connection portion are placed substantially parallel to each other as illustrated in FIG. 7. By connecting the plurality of plate-like portions P1 to P3 with each other by connection portions C1 to C3, base member 5 has a shape including a step rather than a shape in which the entirety of base member 5 is a simple flat plate shape because the plate-like portions are connected with each other by the connection portions. Thus, connection portions C1, C2, and C3 function as ribs and enhance the strength of main-body portion 50 and thus enhance the strength of base member 5. Although connection portions C1 to C3 protrude substantially perpendicularly with respect to plate-like portions P1 to P3 in the present embodiment, as long as connection portions C1 to C3 protrude with thickness direction D3 included therein, connection portions C1 to C3 may be tilted with respect to a direction substantially perpendicular to plate-like portions P1 to P3.

In this embodiment, as illustrated in FIG. 5 to FIG. 7, connection portions C1 to C3 include first connection portion C1, second connection portion C2, and third connection portion C3 which connect between the plurality of plate-like portions P1, P2, and P3. First connection portion C1 connects between first plate-like portion P1 and second plate-like portion P2. Second connection portion C2 connects between second plate-like portion P2 and third plate-like portion P3 and extends toward one end side direction-changing section 52a from the vicinity of drum-member housing portion 53. Third connection portion C3 connects between second plate-like portion P2 and third plate-like portion P3 and extends toward another end side direction-changing section 52b from the vicinity of drum-member housing portion 53.

First connection portion C1 extends substantially parallel to a direction in which cable 2 routed between one end side direction-changing section 52a and another end side direction-changing section 52b extends. By first connection portion C1, the strength of base member 5 can be enhanced with respect to a tensile force added in length direction D1 of guide rail portion 51 due to cable 2. Further, second connection portion C2 and third connection portion C3 are provided along extension directions of cable 2 from drum member 3 to one end side direction-changing section 52a and another end side direction-changing section 52b. By second connection portion C2 and third connection portion C3, the strength of base member 5 can be enhanced with respect to a tensile force of cable 2 to be added between drum member 3 and direction-changing section 52. Since the directions in which second connection portion C2 and third connection portion C3 are provided include both components of length direction D1 and width direction D2 of guide rail portion 51 as illustrated in FIG. 5 and FIG. 6, not only the strength in length direction D1 of base member 5, but also the strength against distortion around length direction D1 of base member 5 can be enhanced.

As illustrated in FIG. 1, guide rail portion 51 includes one end portion E1 and another end portion E2 in length direction D1 and guides movement object 1 in length direction D1. One end portion E1 and another end portion E2 refer to end part regions including end surfaces EF1 and EF2 provided on both ends of length direction D1 of guide rail portion 51. In this embodiment, as illustrated in FIG. 5, guide rail portion 51 is provided on main-body portion 50. Guide rail portion 51 can be integrally formed with another portion of main-body portion 50 by a synthetic resin or the like, for example.

Guide rail portion 51 has a predetermined length in accordance with a moving amount of movement object 1 in length direction D which becomes a moving direction of movement object 1, and guide rail portion 51 has a predetermined width in width direction D2. As illustrated in FIG. 5, guide rail portion 51 is a portion equivalent to a publicly known guide rail in a window regulator, for example, and a component that has a configuration equivalent to a publicly known guide rail, including a length, width, and shape and/or the like, for example, can be employed.

In this embodiment, as illustrated in FIG. 4, guide rail portion 51 includes elongated protruding portion 51a which extends along the moving direction (length direction D1) of movement object 1 and slides while movement object 1 is engaged therewith, as described above. Elongated protruding portion 51a protrudes from guide rail portion 51 to a front side and is engaged with movement object 1. More specifically, elongated protruding portion 51a is configured to be engaged with guided portion 14 of movement object 1. The shapes of elongated protruding portion 51a and guided portion 14 are not particularly limited as long as movement object 1 can slide in engagement with guide rail portion 51. In this embodiment, elongated protruding portion 51a extends upright in a substantially perpendicular direction from one surface 5A (first plate-like portion PI) of guide rail portion 51 on a side edge of guide rail portion 51 and extends along length direction D1. Elongated protruding portion 51a has a substantially L-shaped cross-section and is composed of a guiding portion extending along length direction D1 and an engagement portion extending in width direction D2 of guide rail portion 51. Further, guided portion 14 to be engaged with elongated protruding portion 51a extends in a substantially L-shape so as to elongated protruding portion 51a from a facing surface side of movement object 1 with respect to guide rail portion 51 and is engaged with elongated protruding portion 51a.

Direction-changing section 52 changes a direction in which cable 2 extends between movement object 1 and drum member 3. In this embodiment, direction-changing section 52 is provided on a side of one end portion E1 and on a side of another end portion E2 of guide rail portion 51. More specifically, as illustrated in FIG. 1, direction-changing section 52 includes one end side direction-changing section 52a provided on the side of one end portion E1 of base member 5 (guide rail portion 51) and another end side direction-changing section 52b provided on the side of another end portion E2 of base member 5. In this embodiment, one end side direction-changing section 52a is provided as a guiding portion which changes the direction of cable 2 on a curved guide surface, without any rotation. Further, in this embodiment, another end side direction-changing section 52b is provided as a pulley which changes the direction of cable 2 while rotating. However, as long as one end side direction-changing section 52a and another end side direction-changing section 52b can change the direction of cable 2, their structures are not particularly limited, and these direction-changing sections may be a guiding portion or a rotational pulley. Further, in this embodiment, although drum member 3 is provided separately from one end side direction-changing section 52a and another end side direction-changing section 52b, drum member 3 may be employed as one end side direction-changing section or another end side direction-changing section. As a positional example of this case, a case may be cited where drive portion 4 is provided on the one end side or the other end side, and drum member 3 functions as a direction-changing section on the side where drive portion 4 is provided.

Drum-member housing portion 53 is a portion where drum member 3 is housed. In this embodiment, drum-member housing portion 53 is provided as a recess portion which drum member 3 is housed in base member 5. Drum-member housing portion 53 need not completely house drum member 3, and it is sufficient that drum-member housing portion 53 be capable of housing at least a part of drum member 3 in the axial direction of drum member 3. The position where drum-member housing portion 53 is provided in base member 5 is not particularly limited, but in this embodiment, drum-member housing portion 53 is provided in a position where a distance to one end side direction-changing section 52a on the side of the one end portion and a distance to another end side direction-changing section 52b on the side of the other end portion are substantially equal to each other as illustrated in FIG. 1. Thus, the lengths of first cable 21 and second cable 22 can be substantially equal to each other, and both cables 21 and 22 can be a common member.

In this embodiment, as illustrated in FIG. 1 and FIG. 3, base member 5 includes axial supporting portion 54 which axially supports drum member 3, and drum member 3 is configured to rotate while being axially supported by axial supporting portion 54. In this embodiment, axial supporting portion 54 includes a plurality of arm-shaped members 54a extending toward a radially inner side of drum member 3 toward an axial core of drum member 3 from an outer side of drum-member housing portion 53 on a side of one surface 5A which is a side opposite to the side of drive source 4. The plurality of arm-shaped members 54a is coupled by coupling portion 54b in the vicinity of the axial core of drum member 3 and is axially supported while axial portion 32 extending from an end surface of drum member 3 is engaged with axial supporting hole 54c provided in coupling portion 54b. Note that, axial supporting portion 54 is configured such that axial portion 32 of drum member 3 is engaged with axial supporting hole 54c in this embodiment, but the structure of axial supporting portion 54 is not particularly limited as long as drum member 3 is configured to be axially supported by base member 5. For example, drum member 3 may be axially supported by providing axial supporting portion 54 as a protruding portion extending toward drum member 3, and inserting the protruding portion into a recess portion or a hole portion provided along an axial core of drum member 3.

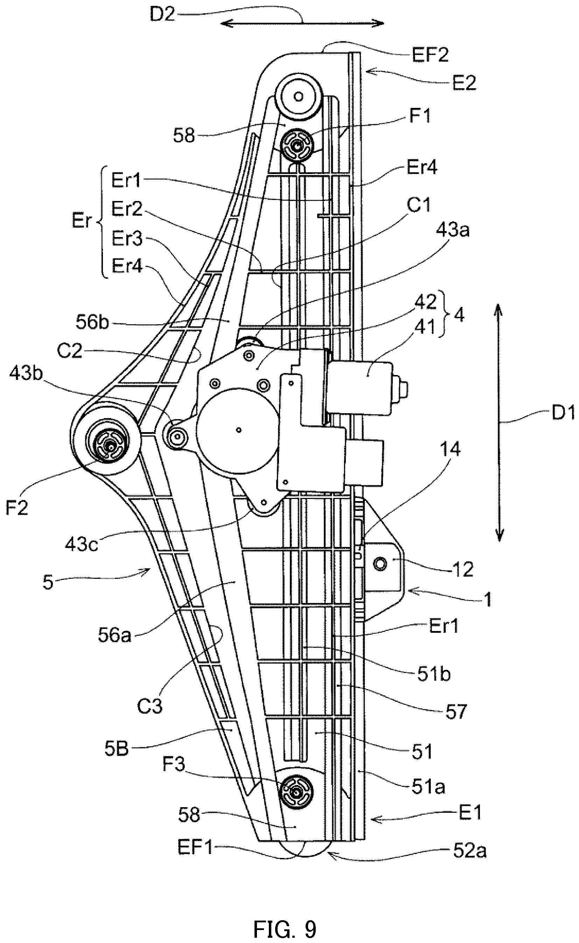

Further, as illustrated in FIG. 9, base member 5 may include erected portions Er1, Er2, Er3, and Er4 (may be collectively referred to as "erected portion Er" simply, hereinafter) which are erected from plate-like portions PI, P2, and P3 (see, FIG. 5) while including thickness direction D3 of base member 5. Although erected portion Er is optional in this embodiment, erected portion Er can be provided for further enhancing the strength of base member 5. Erected portion Er is provided on the side of another surface 5B of base member 5 in this embodiment. In FIG. 9, provided are, first erected portion Er1 provided along length direction D1, second erected portion Er2 provided along width direction D2, and third erected portion Er3 provided while tilting with respect to length direction D1 and width direction D2. First erected portion Er1 provided in length direction D1 further enhances the strength with respect to the load to be added in length direction D1 due to a tensile force of cable 2. Second erected portion Er2 provided in width direction D2 further enhances the strength with respect to the load causing distortion about the axis along which base member 5 extends in length direction D1. Third erected portion Er3 further enhances the strength with respect to the load to be added in length direction D1 and the load to be added in the distortion direction. Further, outer peripheral side erected portion Er4 erected along an outer peripheral edge of base member 5 may be provided, and outer peripheral side erected portion Er4 enhances the strength with respect to the load to be added in length direction D1 and the load to be added in the distortion direction.

Next, features of each portion of object moving device D will be described in more detail. Note that, the features to be described hereinafter are mutually combinable.

### <Drum-Side Protection Wall Portion and Direction-Changing-Section Side Wall Portion>

As illustrated in FIG. 3, FIG. 10, and FIG 11, base member 5 of this embodiment includes: wall surface W facing an outer periphery of drum member 3 housed in drum-member housing portion 53; and drum-side protection wall portion 55 provided on an outer peripheral side of drum member 3 housed in drum-member housing portion 53. Further, as illustrated in FIG. 3, FIG. 10, and FIG 11, base member 5 of this embodiment includes direction-changing-section-side wall portion 56 which is connected to drum-side protection wall portion 55 and which extends along cable 2 placed between direction-changing section 52 and drum-member housing portion 53.

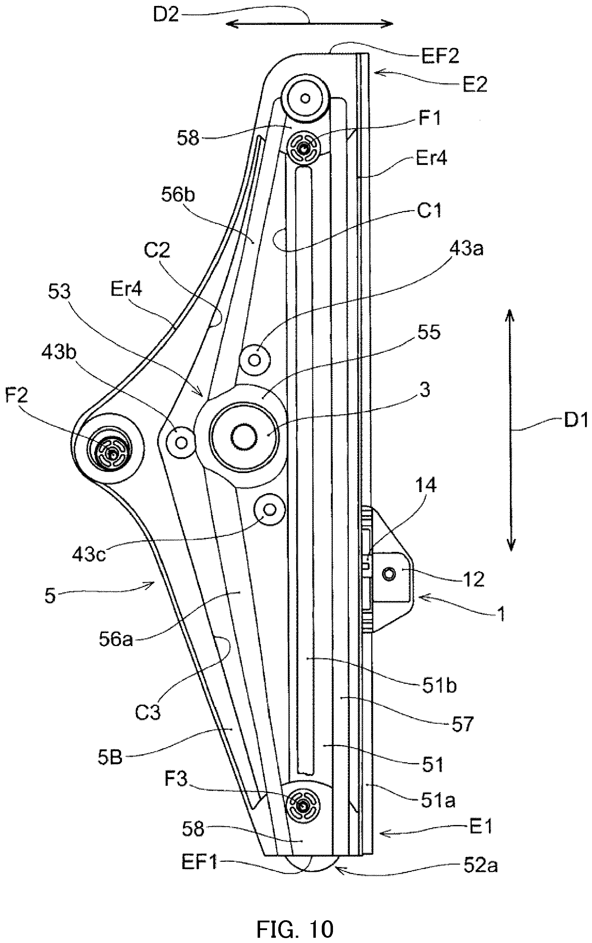

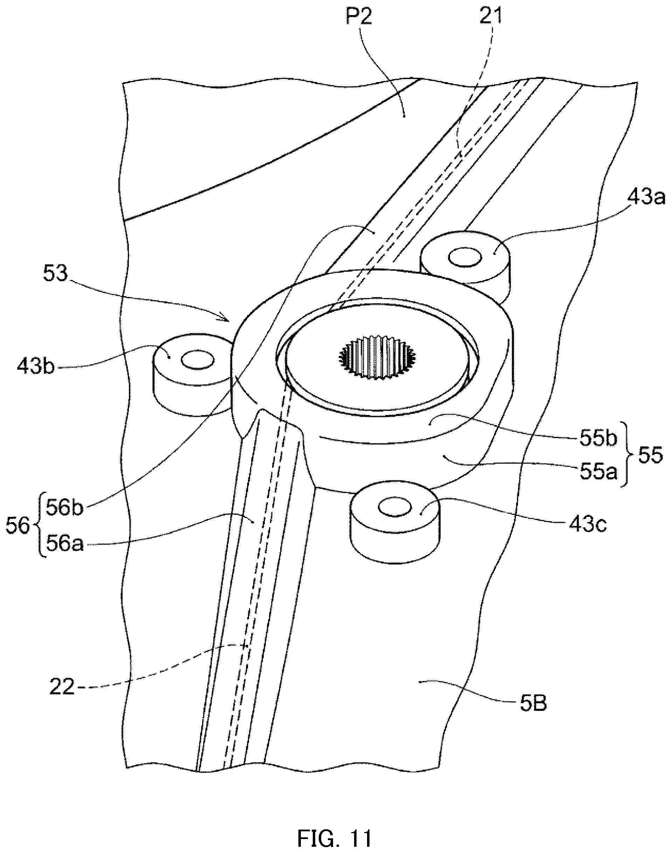

Drum-side protection wall portion 55 is a protection wall portion provided on the outer peripheral side of drum member 3. Drum-side protection wall portion 55 protects the outer peripheral side of drum member 3 and also enhances the strength of base member 5 on the outer peripheral side of drum member 3. In this embodiment, as illustrated in FIG. 10, and FIG 11, drum-side protection wall portion 55 protrudes toward drive source 4 from another surface 5B of base member 5. In this embodiment, as illustrated in FIG. 3, and FIG 11, drum-side protection wall portion 55 includes: wall portion 55a extending upright from second plate-like portion P2 (see, FIG. 5) in another surface 5B of base member 5; and flange portion 55b extending toward the axial core of drum member 3 from an end portion of wall portion 55a on the side of another surface 5B of base member 5. In this embodiment, flange portion 55b is annularly provided in the outer periphery of drum member 3 and forms a flat surface extending perpendicularly with respect to thickness direction D3 of base member 5. Note that, the shape of drum-side protection wall portion 55 is not limited to the shape illustrated in the drawings. For example, as long as drum-side protection wall portion 55 is connected to direction-changing-section-side wall portion 56, drum-side protection wall portion 55 may be provided in a substantially C-shape, for example, without completely covering the outer periphery of drum member 3.

As illustrated in FIG. 1, direction-changing-section-side wall portion 56 extends along cable 2 from drum-side protection wall portion 55 toward direction-changing sections 52a and 52b from drum-side protection wall portion 55. In this embodiment, as illustrated in FIG. 1, FIG. 10, and FIG. 11, direction-changing-section-side wall portion 56 includes one end side direction-changing-section-side wall portion 56a extending toward the side of one end portion E1 of guide rail portion 51, and another end side direction-changing-section-side wall portion 56b extending toward the side of another end portion E2 of guide rail portion 51. As long as direction-changing-section-side wall portion 56 is connected to drum-side protection wall portion 55 and extends along cable 2 placed between direction-changing section 52 and drum-member housing portion 53, the shape and/or structure of direction-changing-section-side wall portion 56 is not particularly limited. In this embodiment, as illustrated in FIG. 4, direction-changing-section-side wall portion 56 includes a pair of wall bodies 561 provided so as to locate cable 2 between wall bodies 561, but a direction-changing-section-side wall portion may be provided on only one side of both lateral sides of cable 2.

In this embodiment, as described above, direction-changing-section-side wall portion 56 extends along cable 2 and also is connected to drum-side protection wall portion 55. Thus, the strength of base member 5 is enhanced. More specifically, for example, at the time of operation of cable 2 or in a case where a load is applied to movement object 1 from a window glass and/or the like, a tensile force is added to cable 2. When a tensile force is added to cable 2, a load such as bending or distortion is added to base member 5 via direction-changing sections 52a and 52b around which cable 2 is wound. With respect to this load, since direction-changing-section-side wall portion 56 extends along cable 2, this load can be supported by direction-changing-section-side wall portion 56, and the strength of base member 5 is enhanced. Further, since direction-changing-section-side wall portion 56 is connected to drum-side protection wall portion 55, the force added to direction-changing-section-side wall portion 56 due to the tensile force of cable 2 is transmitted to drum-side protection wall portion 55. Drum-side protection wall portion 55 extends toward drive source 4 (motor housing 42), and the strength of drum-side protection wall portion 55 and a peripheral portion thereof are thus reinforced by drive source 4 and the attachment structure thereof. For this reason, drum-side protection wall portion 55 has a high strength as compared with other portions and thus can receive force. Accordingly, the strength of object moving device D can be enhanced. Further, since the strength of object moving device D can be enhanced by drum-side protection wall portion 55 and direction-changing-section-side wall portion 56 as described above, provision of a reinforcement rib in a position that hinders routing of cable 2 for the purpose of enhancing the strength is no longer necessary. For this reason, unlike PTL 1, provision of cable 2 in a position where friction with another member, such as a door structure, occurs, is not necessary, and thus, the possibility of cable 2 being cut due to friction is low, and smooth sliding of movement object 1 can be ensured.

Further, in the present embodiment, as illustrated in FIG. 4, base member 5 includes cable housing recess portion Cv which houses cable 2 extending toward direction-changing sections 52a and 52b from drum member 3, and cable housing recess portion Cv includes direction-changing-section-side wall portion 56. Thus, direction-changing-section-side wall portion 56 which enhances the strength of base member 5 also functions as a portion which houses cable 2. Since base member 5 includes cable housing recess portion Cv, cable 2 need not be routed in a state of being separated from the surface of base member 5 in thickness direction D3 (in FIG. 4, the state in which cable 2 is placed on an upper side from an upper surface of second plate-like portion P2) between direction-changing sections 52a and 52b, and drum member 3. Accordingly, the amount of protrusion of direction-changing sections 52a and 52b, around which cable 2 is wound, from the surface of base member 5 can be small. For this reason, the thickness of base member 5 can be small, and also the strength can be enhanced because cable housing recess portion Cv includes direction-changing-section-side wall portion 56. In this embodiment, as illustrated in FIG. 4, direction-changing-section-side wall portion 56 includes bottom surface 562 which connects between a pair of wall bodies 561, and the pair of wall bodies 561 and bottom surface 562 form cable housing recess portion Cv. However, direction-changing-section-side wall portion 56 may be configured such that a space between the pair of wall bodies 561 penetrates through in thickness direction D3 without provision of bottom surface 562 and cable housing recess portion Cv extending along a cable extending direction is the space penetrating through between the pair of wall bodies 561. The width and/or depth of cable housing recess portion Cv is not particularly limited as long as cable 2 can be housed. Note that, in this embodiment, cable housing recess portion Cv is configured so as to increase in depth as cable housing recess portion Cv approaches to drum member 3.

Further, in this embodiment, by housing cable 2 in cable housing recess portion Cv, shifting of drum member 3 in a depth direction (thickness direction D3) of cable housing recess portion Cv becomes easy. More specifically, in FIG. 1, when no cable housing recess portion Cv is provided, cable 2 needs to be positioned in a front direction of the sheet, but when cable housing recess portion Cv is provided in base member 5, cable 2 can be positioned in a further depth direction of the sheet. For this reason, drum member 3 need not protrude in the front direction of the sheet in FIG. 1, and the entirety of object moving device D can be reduced in thickness. Particularly, in this embodiment, as viewed from the side of one surface 5A of base member 5, drum member placing region R1 defined by second plate-like portion P2 where drum member 3 is provided and connection portions C1 to C3 is provided in a recess shape with respect to first plate-like portion P1 and third plate-like portion P3 (see, FIG. 3 and FIG. 7). For this reason, as illustrated in FIG. 3, drum member 3 does not protrude beyond first plate-like portion P1 and third plate-like portion P3 (or does not protrude so much) and does not become an obstacle in a moving path of movement object 1. Accordingly, drum member 3 can be placed adjacent to guide rail portion 51, and thus, not only reduction of object moving device D in thickness but also reduction of base member 5 in size in width direction D2 can be achieved. Accordingly, base member 5 and object moving device D can be further reduced in weight. Moreover, in a case where cable 2 is housed in cable housing recess portion Cv, friction of cable 2 with another member can be prevented, and thus, a member for protecting cable 2, such as an outer casing, need not be provided as another member.

### <Extension Wall Portion>

Further, in this embodiment, as illustrated in FIG. 1 and FIG. 3, base member 5 includes extension wall portion 57 extending along elongated protruding portion 51a and forming cable housing recess portion (extension-wall-portion-side cable housing recess portion) Cv2 which houses cable 2 extending from movement object 1 toward direction-changing section 52.

Extension wall portion 57 extends along elongated protruding portion 51a and is also provided in an extending direction of cable 2. In this embodiment, extension wall portion 57 extends substantially parallel to elongated protruding portion 51a and extends between one end side direction-changing section 52a and another end side direction-changing section 52b. In this embodiment, as illustrated in FIG. 3, extension wall portion 57 is provided in a recess groove shape on the side of one surface 5A where elongated protruding portion 51a of guide rail portion 51 protrudes, and protrudes toward the side of another surface 5B. In this embodiment, as illustrated in FIG. 3 and FIG. 4, extension wall portion 57 includes a pair of wall bodies 57a and bottom surface 57b which connects between the pair of wall bodies 57a. Thus, cable housing recess portion Cv2 is provided. However, extension wall portion 57 may be configured such that a space between the pair of wall bodies 57a penetrates through in thickness direction D3 without provision of bottom surface 57b. The width and/or depth of cable housing recess portion Cv2 is not particularly limited as long as cable 2 can be housed.

Extension wall portion 57 can support the load added to base member 5 due to a tensile force of cable 2. Thus, the strength of base member 5 can be enhanced. Further, since extension wall portion 57 forms cable housing recess portion Cv2, cable 2 extending from direction-changing section 52 to movement object 1 need not be routed in a state of being separated from the surface of base member 5 in thickness direction D3 (in FIG. 3, the state in which cable 2 is placed on an upper side from an upper surface of plate-like portion PI). Accordingly, the amount of protrusion of direction-changing section 52, around which cable 2 is wound, from the surface of base member 5 can be small. For this reason, the thickness of base member 5 can be small, and also the strength of base member 5 can be enhanced.

Note that, in this embodiment, since first cable 21 and second cable 22 are placed coaxially, first cable 21 and second cable 22 can be housed in cable housing recess portion Cv2 of one extension wall portion 57, and thus, a simple structure can be achieved. However, cable ends 21E and 22E may be attached to movement object 1 such that first cable 21 and second cable 22 are shifted in width direction D2. In this case, two extension wall portions 57 may be provided in width direction D2.

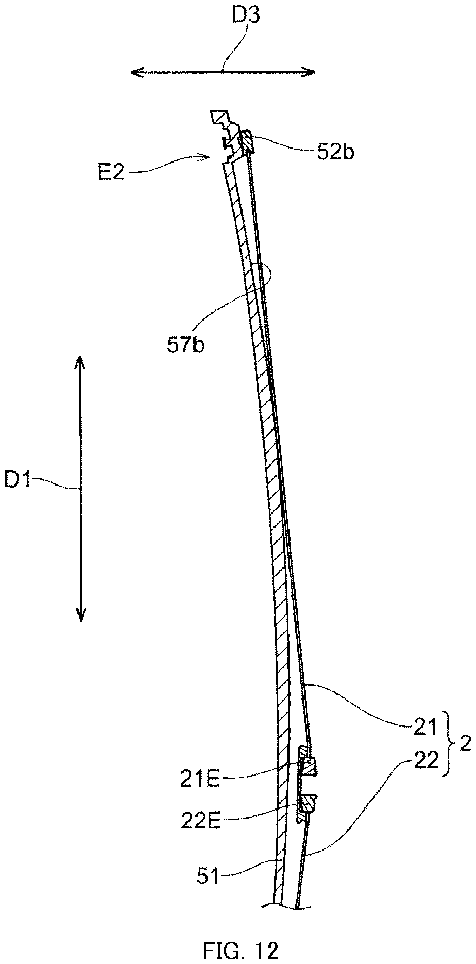

Further, in this embodiment, as illustrated in FIG. 12, object moving device D may be configured such that cable 2 extending from movement object 1 toward direction-changing section 52 comes into contact with bottom surface 57b of cable housing recess portion Cv2. More specifically, in this embodiment, as illustrated in FIG. 12, bottom surface 57b of cable housing recess portion Cv2 is curved such that a center portion of bottom surface 57b in length direction D of base member 5 protrudes on the side of one surface 5A. In this case, as illustrated in FIG. 12, cable 2 extending between direction-changing section 52 (direction-changing section 52b in FIG. 12) and movement object 1 comes into contact with bottom surface 57b of cable housing recess portion Cv2. In a case where cable 2 does not come into contact with bottom surface 57b, for example, when a vehicle door to which object moving device D is attached is opened or closed, a noise due to vibration of cable 2 placed under tension from direction-changing section 52 to movement object 1 occurs. Meanwhile, as in this embodiment, cable 2 placed under tension from direction-changing section 52 to movement object 1 comes into contact with bottom surface 57b of cable housing recess portion Cv2 in the middle between direction-changing section 52 and movement object 1. Thus, vibration of cable 2 can be suppressed, and the noise caused by vibration of cable 2 can be small. Note that, a configuration may be employed in which cable 2 and bottom surface 57 come into contact with each other even in a case where movement object 1 is in any position, or a configuration may be employed in which cable 2 and bottom surface 57 come into contact with each other only when movement object 1 is in an optional position, for example, in one end side or another end side.

### <Base-Member-Side Fitting Portion and Movement-Object-Side Fitting Portion>

Further, in this embodiment, as illustrated in FIG. 1 and FIG. 4, guide rail portion 51 includes base-member-side fitting portion 51b extending substantially parallel to elongated protruding portion 51a. Further, movement object 1 includes: guided portion 14 to be guided by elongated protruding portion 51a in engagement therewith; and movement-object-side fitting portion 15 which fits to base-member-side fitting portion S1b and prevents movement object 1 from tilting with respect to a moving direction (length direction D1). Base-member-side fitting portion 51b is provided on the side of a surface (one surface 5A) of guide rail portion 51, which faces movement object 1, and fits to movement-object-side fitting portion 15 of movement object 1. As illustrated in FIG. 4, movement-object-side fitting portion 15 is provided on a surface of movement object 1, which faces guide rail portion 51, and fits to base-member-side fitting portion 51b. Movement-object-side fitting portion 15 is guided along base-member-side fitting portion 51b during movement of movement object 1 along guide rail portion 51.

In this embodiment, as illustrated in FIG. 1, base-member-side fitting portion 51b is provided within a movement range of movement object 1 substantially parallel to elongated protruding portion 51a in length direction D1 of guide rail portion 51. In this embodiment, as illustrated in FIG. 1 and FIG. 4, base-member-side fitting portion 51b is provided in a recess groove shape on the side of one surface 5A where elongated protruding portion 51a of guide rail portion 51 protrudes, and protrudes on the side of another surface 5B. In this embodiment, as illustrated in FIG. 3 and FIG. 4, base-member-side fitting portion 51b is provided as a fitting recess portion having a pair of wall bodies 511 and bottom surface 512 which connects between the pair of wall bodies 511. However, base-member-side fitting portion 51b may be configured such that a space between the pair of wall bodies 511 penetrates through in thickness direction D3 without provision of bottom surface 512. Further, as long as base-member-side fitting portion 51b extends substantially parallel to elongated protruding portion 51a and is capable of fitting to movement-object-side fitting portion 15, base-member-side fitting portion 51b may be provided as an elongated protrusion of guide rail portion 51 on the side of one surface 5A, or another fitting structure may be employed.

In this embodiment, as illustrated in FIG. 4, movement-object-side fitting portion 15 is provided in a portion of slide portion 11 of movement object 1, which faces guide rail portion 51. In this embodiment, movement-object-side fitting portion 15 is provided as a protruding portion which fits to base-member-side fitting portion 51b. Movement-object-side fitting portion 15 has a width fitting to base-member-side fitting portion 51b. In this embodiment, a configuration is employed in which at the time of fitting of movement-object-side fitting portion 15 to base-member-side fitting portion 51b, a leading end of movement-object-side fitting portion 15 is guided in contact with bottom surface 512 of base-member-side fitting portion 51b. However, a configuration may be employed in which guiding is performed in a state where the leading end of movement-object-side fitting portion 15 is separated from bottom surface 512. Note that, movement-object-side fitting portion 15 is not limited to the structure illustrated in the drawings, and can be changed as appropriate in accordance with the structure of base-member-side fitting portion 51b. For example, in a case where base-member-side fitting portion 51b is provided as an elongated protrusion, movement-object-side fitting portion 15 may be a recess groove to which the elongated protrusion fits.

In this embodiment, guide rail portion 51 includes base-member-side fitting portion 51b extending substantially parallel to elongated protruding portion 51a, and movement object 1 includes movement-object-side fitting portion 15 which fits to base-member-side fitting portion 51b. Thus, when movement object 1 moves along guide rail portion 51, guided portion 14 of movement object 1 is guided by elongated protruding portion 51a of guide rail portion 51, and movement-object-side fitting portion 15 is guided by base-member-side fitting portion 51b. Accordingly, movement object 1 is guided in two positions which are elongated protruding portion 51a and base-member-side fitting portion 51b placed separately from each other in width direction D2. Thus, tilting of movement object 1 with respect to length direction D1 can be suppressed, and movement object 1 can smoothly slide along guide rail portion 51 without rattling of movement object 1 during movement of movement object 1 along guide rail portion 51.

Further, a configuration is employed in which even when a rotational force about the axis which extends in length direction D1 is added to movement object 1 at the time of operation via cable 2 or the like, as illustrated in FIG. 4, wall bodies 511 of base-member-side fitting portion 51b come into contact with side walls of movement-object-side fitting portion 15. In this case, rotation of movement object 1 can be suppressed. Further, in this embodiment, as illustrated in FIG. 4, a configuration is employed in which a flat portion (first plate-like portion PI) is provided between elongated protruding portion 51a and base-member-side fitting portion 51b, and this flat portion and facing surface 11a of slide portion 11 of movement object 1 with respect to guide rail portion 51 come into contact with each other. In this case, even when a rotational force about the axis which extends in length direction D1 is added to movement object 1 at the time of operation via cable 2 and/or the like, the flat portion (first plate-like portion PI) and facing surface 11a of movement object 1 come into contact with each other, and rotation of movement object 1 can be suppressed.

Further, in this embodiment, as illustrated in FIG. 3, base-member-side fitting portion 51b and elongated protruding portion 51a are placed so as to locate cable 2 therebetween in width direction D2. Thus, base-member-side fitting portion 51b and elongated protruding portion 51a which guide movement object 1 are provided on both sides in width direction D2 of a position where a tensile force is added to movement object 1 due to cable 2, and thus, sliding of movement object 1 becomes more stable.

Further, as a variation of this embodiment, the base-member-side fitting portion may be cable housing recess portion Cv2. The configuration of base member 5 can be simplified by, for example, providing movement-object-side fitting portion 15 between a pair of cable-end connection portions 13 and forming cable housing recess portion Cv2 where cable 2 is housed and a path where movement-object-side fitting portion 15 slides to be the same recess portion.

### <Thick Portion>

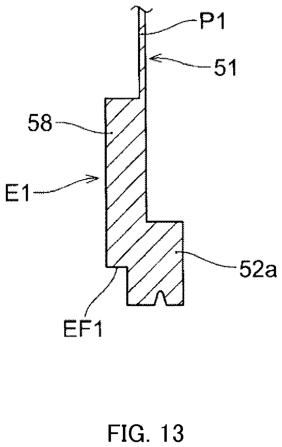

In this embodiment, as illustrated in FIG. 6 and FIG. 13, base member 5 includes end surface EF1 and thick portion 58 extending from end surface EF1 in a length direction with a predetermined thickness in one end portion E1 of guide rail portion 51. As illustrated in FIG. 6, one end side direction-changing section 52a is connected to a position so as to form a relationship such that thick portion 58 is positioned on a line connecting between one end side direction-changing section 52a and another end side direction-changing section 52b in one end portion E1.

As illustrated in FIG. 6 and FIG. 13, thick portion 58 is a thick reinforcement portion provided in one end portion E1 of guide rail portion 51. Thick portion 58 is provided such that a bearing force in one end portion E1 of guide rail portion 51 is enhanced with respect to a load added via one end side direction-changing section 52a due to a tensile force of cable 2. Although the thickness of thick portion 58 is not particularly limited, for example, thick portion 58 is provided so as to have a thickness larger than a thickness of a center portion in length direction D1 of plate-like portions P1 to P3 not including direction-changing-section-side wall portion 56, extension wall portion 57, and erected portion Er and/or the like. Note that, the thickness of thick portion 58 is not necessarily uniform in a region where thick portion 58 is provided. Thick portion 58 is provided with a predetermined expansion from end surface EF1 of one end portion E1 toward a side of another end portion E2. The length of thick portion 58 in length direction D1 is not particularly limited, but in this embodiment, thick portion 58 is provided on a side of end surface EF1 as compared with a movement region of movement object 1, for example. In this embodiment, as illustrated in FIG. 6, thick portion 58 is provided as a substantially semi-circular region, but the shape of the region formed by thick portion 58 is not particularly limited.

Note that, the term "one end portion of guide rail portion 51" where thick portion 58 is provided means at least one of both ends of guide rail portion 51, and thick portion 58 may be provided in both one end portion E1 and another end portion E2 or may be provided only in another end portion E2. Likewise, the term "one end side direction-changing section" on a side where thick portion 58 is provided, means at least one direction-changing section of direction-changing sections 52, herein.

In this embodiment, one end side direction-changing section 52a is provided such that thick portion 58 is positioned in a direction in which a load is added when a load is added due to a tensile force of cable 2 in one end portion E1. Thick portion 58 receives, by thick portion 58 having high rigidity, the force added in one end portion E1 of guide rail portion 51 due to a tensile force of cable 2 in one end side direction-changing section 52a. Accordingly, when the force is added to direction-changing section 52 due to cable 2, thick portion 58 functions as a reinforcement portion of one end portion E1, and the load to be added to guide rail portion 51 can be supported by thick portion 58.

In this embodiment, one end side direction-changing section 52a is placed such that the load to be applied to one end side direction-changing section 52a due to cable 2 is mainly applied to main-body portion 50. In this embodiment, the strength of base member 5 is enhanced by main-body portion 50 including thick portion 58 by receiving the tensile force added to direction-changing section 52 due to cable 2, mainly by main-body portion 50. More specifically, in this embodiment, a center region of base member 5 which has a smaller thickness than thick portion 58 (a region between one end portion E1 and another end portion E2 excluding an outer peripheral edge of base member 5) is continuously provided with thick portion 58 in length direction D1. In this embodiment, as illustrated in FIG. 8 and FIG. 12, base member 5 is provided while being curved in length direction D1 such that the center of the center portion of base member 5 protrudes on the side of one surface 5A. Cable 2 to be routed on the side of one surface 5A of base member 5 is not routed along the curve of base member 5, but extends between one end side direction-changing section 52a and another end side direction-changing section 52b, and between one end side direction-changing section 52a or another end side direction-changing section 52b and drum member 3, while intersecting with a virtual plane including plate-like portions P1 and P2 (surface not including direction-changing-section-side wall portion 56, extension wall portion 57, or erected portion Er and/or the like) of base member 5. More specifically, in this embodiment, direction-changing-section-side wall portion 56 and extension wall portion 57 are provided in base member 5, and cable 2 is housed in each of cable housing recess portions Cv and Cv2, and thus, cable 2 extends so as to intersect with the virtual plane including plate-like portions P1 and P2 of base member 5. Thus, base member 5 is configured such that a load to be added due to a tensile force of cable 2 is mainly added to main-body portion 50 including thick portion 58 by causing cable 2 not to follow the curved surface of base member 5 and causing cable 2 to pass through a shortest path. Thick portion 58 absorbs a part of the load received due to a tensile force of cable 2, and allows the load added to base member 5 to be easily received by main-body portion 50 other than thick portion 58 in length direction D1. Accordingly, as compared with a case where cable 2 is routed along the curved surface, the strength of base member 5 is enhanced.

In this embodiment, for the purpose of easier routing of cable 2 described above, one end side direction-changing section 52a is provided while being tilted with respect to the curved surface of base member 5 in order for cable 2 proceeding from one end side direction-changing section 52a to drum member 3 to pass through a shortest path toward drum member 3. Moreover, one end side direction-changing-section-side wall portion 56a and another end side direction-changing-section-side wall portion 56b are provided such that the depth of cable housing recess portion Cv becomes deeper as these wall portions approach to the side of drum member 3. Because of direction-changing section 52 described above and/or the structures of one end side direction-changing-section-side wall portion 56a and another end side direction-changing-section-side wall portion 56b, routing such that cable 2 intersects with the virtual plane including plate-like portions P1 and P2 of base member 5 is made easier. For this reason, the load to be added due to a tensile force of cable 2 is likely to be added mainly to main-body portion 50 including thick portion 58, and the strength of base member 5 can be further enhanced.

Note that, base member 5 may include erected portion Er, and in this case, a part of the load to be added to direction-changing section 52 due to cable 2 is applied to erected portion Er, and thus, the strength of base member 5 can be further enhanced. Further, in this embodiment, first erected portion Er1 extending in length direction D1 is provided along base-member-side fitting portion 51b and extension wall portion 57 on the side of another surface 5B of base member 5 as illustrated in FIG. 9. In this case, a bearing force against the load to be added in length direction D1 of base member 5 can be further enhanced. Note that, a configuration is employed in which the load to be added to one end side direction-changing section 52a due to cable 2 is added mainly to main-body portion 50 in this embodiment. However, it is also possible to employ a configuration in which the load is uniformly added to main-body portion 50 and erected portion Er.

Moreover, in this embodiment, fixing portions F1 and F3 for fixing base member 5 to an attachment object, such as a door panel, are provided in thick portions 58. In this case, it is unlikely that base member 5 be broken in the fixing positions between fixing portions F1 and F3, and the attachment object, and also the load can be released to the side of the attachment object from fixing portions F1 and F3. Thus, the strength of object moving device D is further enhanced.

### Reference Signs List

1 Movement object (carrier plate)
11 Slide portion
11a Facing surface
12 Window glass attachment portion
13 Cable-end connection portion
14 Guided portion
15 Movement-object-side fitting portion
2 Cable
21 First cable
21E Cable end
22 Second cable
22E Cable end
3 Drum member
31 Cable winding portion
32 Axial portion of drum member
4 Drive source
41 Motor
42 Motor housing
43a, 43b, 43c, Attachment portion
5 Base member
50 Main-body portion
51 Guide rail portion
51a Elongated protruding portion
51b Base-member-side fitting portion
511 Wall body
512 Bottom surface
52 Direction-changing section
52a One end side direction-changing section
52b Another end side direction-changing section
53 Drum-member housing portion
54 Axial support portion
54a Arm-shaped member
54b Coupling portion
54c Axial supporting hole
55 Drum-side protection wall portion
55a Wall portion
55b Flange portion
56 Direction-changing-section-side wall portion
56a One end side direction-changing section-side wall portion
56b Another end side direction-changing-section-side wall portion
561 Wall body
562 Bottom surface
57 Extension wall portion
57a Wall body
57b Bottom surface
58 Thick portion
5A One surface of base member
5B Another surface of base member
C1 First connection portion
C2 Second connection portion
C3 Third connection portion
Cv Cable housing recess portion
Cv2 Cable housing recess portion (extension-wall-portion-side cable housing recess portion)
D Object moving device (window regulator)
D1 Length direction of guide rail portion
D2 Width direction of guide rail portion
D3 Thickness direction of main-body portion
EF1, EF2 End surface
E1 One end portion
E2 Another end portion
Er Erected portion
Er1 First erected portion
Er2 Second erected portion
Er3 Third erected portion
Er4 Outer peripheral side erected portion
F1, F2, F3 Fixing portion
P1 First plate-like portion
P2 Second plate-like portion
P3 Third plate-like portion
R1 Drum-member placing region
R2 Peripheral edge portion
W Wall surface

## Claims

1. An object moving device, comprising:
a movement object;
a cable in connection with the movement object;
a drum member in connection with the cable; and
a drive source to be in connection with the drum member, and to rotate the drum member; and
a base member having a thickness, wherein
the object moving device moves the movement object via the cable by winding and unwinding, by a drive force of the drive source, the cable in connection with the drum member, and wherein
the base member includes
a guide rail portion including one end portion and another end portion in a length direction, and being configured to guide the movement object in the length direction,
a direction-changing section configured to change a direction in which the cable extends between the movement object and the drum member, and
a drum-member housing portion in which the drum member is housed, wherein
the guide rail portion includes an elongated protruding portion extending along a moving direction of the movement object and configured to slide while the movement object is engaged therewith, and
the base member includes an extension wall portion extending along the elongated protruding portion and forming a cable housing recess portion which houses a cable extending from the movement object toward the direction-changing section.

2. The object moving device according to claim 1, wherein the cable extending from the movement object toward the direction-changing section comes into contact with a bottom surface of the cable housing recess portion.

3. The object moving device according to claim 1 or 2, wherein the drum-member housing portion is formed in a position where a distance to the direction-changing section on a side of one end portion and a distance to the direction-changing section on a side of another end portion are substantially equal to each other.

4. The object moving device according to any one of claims 1 to 3, wherein the base member is made of a resin.
